# FASCICULE DE BREVET EUROPEEN

(11) **EP 3 774 390 B1**
(45) Date de publication et mention de la délivrance du brevet: **16.10.2024**
(21) Numéro de dépôt: 19720970.3
(22) Date de dépôt: 04.04.2019
(51) Int. Cl.: B60C 1/00, C08K 3/34, C08K 3/36, C08K 5/378, C08K 5/372, C08K 3/04

(54) **PNEUMATIQUE COMPORTANT UNE COMPOSITION DE CAOUTCHOUC COMPRENANT UN NOUVEL AGENT DE COUPLAGE POLYSULFURE PORTEUR DE GROUPES ASSOCIATIFS AZOTES**
REIFEN MIT EINER KAUTSCHUKZUSAMMENSETZUNG MIT EINEM NEUARTIGEN POLYSULFIDKUPPLUNGSMITTEL MIT STICKSTOFFHALTIGEN ASSOZIATIVEN GRUPPEN
TYRE INCLUDING A RUBBER COMPOSITION COMPRISING A NOVEL POLYSULPHIDE COUPLING AGENT HAVING NITROGENOUS ASSOCIATIVE GROUPS

(30) Priorité: 06.04.2018 FR 1853020
(43) Date de publication de la demande: 17.02.2021
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND Cedex 9 (FR); CUSTODERO, Emmanuel, 63040 CLERMONT-FERRAND Cedex 9 (FR); COUTURIER, Jean-Luc, 69493 PIERRE-BENITE Cedex (FR); DEVAUX, Jean-François, 69493 PIERRE-BENITE Cedex (FR); HIDALGO, Manuel, 69493 PIERRE-BENITE Cedex (FR)
(74) Mandataire: M.F.P. Michelin
(86) Numéro de dépôt international: PCT/FR2019/050784
(87) Numéro de publication internationale: WO 2019/193287

(56) Documents cités:
- EP-A1- 0 791 623
- EP-A1- 2 952 541
- US-A1- 2014 155 440
- US-A1- 2017 073 508

## Description

Le domaine de la présente invention est celui des pneumatiques, en particulier des pneumatiques comportant au moins une composition de caoutchouc renforcée par une charge inorganique.

Depuis que les économies de carburant et la nécessité de protéger l'environnement sont devenues une priorité, il s'est avéré nécessaire de produire des pneumatiques ayant une résistance au roulement réduite, sans pénalisation de leurs autres performances.

Ceci a été rendu possible notamment grâce à la découverte de nouvelles compositions de caoutchouc renforcées de charges inorganiques spécifiques qualifiées de « renforçantes », capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant. Des compositions de caoutchouc chargées de telles silices hautement dispersibles (notées « HD » ou « HDS » pour « highly dispersible » ou « highly dispersible silica »), utilisables dans les pneumatiques à basse résistance au roulement parfois qualifiés de « Pneus Verts » pour l'économie d'énergie offerte à l'usager (« Green Tyre concept »), ont été abondamment décrites. On se reportera notamment aux demandes de brevet EP0501227, EP0692492, EP0692493, EP0735088, EP0767206, EP0786493, EP0881252, WO99/02590, WO99/02601, WO99/02602, WO99/06480, WO00/05300 et WO00/05301.

Toutefois, bien que ces charges inorganiques renforçantes présentent une haute dispersibilité, leur mise en œuvre dans une composition de caoutchouc reste néanmoins plus difficile que pour les compositions de caoutchouc chargées conventionnellement de noir de carbone.

En effet, pour des raisons d'affinités réciproques, les particules de ces charges inorganiques ont une fâcheuse tendance, dans la matrice élastomérique, à s'agglomérer entre elles. Ces interactions ont pour conséquence néfaste de limiter la dispersion de la charge et donc de limiter les propriétés de renforcement à un niveau sensiblement inférieur à celui qu'il serait théoriquement possible d'atteindre si toutes les liaisons élastomère-charge inorganique susceptibles d'être créées pendant l'opération de mélange, étaient effectivement obtenues. Il est connu de l'homme du métier qu'il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

On rappelle ici que par « agent de couplage » (charge inorganique/élastomère), on doit entendre, de manière connue, un agent apte à établir une connexion suffisante, de nature chimique et/ou physique, entre la charge inorganique et l'élastomère diénique ; un tel agent de couplage, au moins bifonctionnel, a par exemple comme formule générale simplifiée « Y-W-X », dans lequel:
- Y représente un groupe fonctionnel (fonction « Y ») qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction « X ») capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent, en particulier, pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage charge inorganique/élastomère, notamment silice/élastomère, ont été décrits dans un grand nombre de documents. Les plus connus sont des silanes sulfurés bifonctionnels, en particulier des alkoxysilanes sulfurés, et plus particulièrement encore, le tétrasulfure de bis 3-triéthoxysilylpropyle (en abrégé TESPT), commercialisé par la société Evonik sous la référence « Si69 ». On peut se reporter notamment aux documents FR2206330 et FR2149339 qui décrivent de tels agents de couplage et des compositions de caoutchouc les contenants. Le TESPT est l'agent de couplage de référence de l'homme du métier pour les compositions de caoutchouc chargées de charges inorganiques renforçantes telles que des silices. Il est généralement considéré aujourd'hui comme le produit apportant pour ces compositions le meilleur compromis en termes de sécurité au grillage, de facilité de mise en œuvre et de pouvoir renforçant ; toutefois il présente l'inconvénient connu est d'être fort onéreux.

Les manufacturiers de pneumatiques cherchent toujours à améliorer les performances de leurs pneumatiques tout en diminuant les coûts de productions, notamment les performances des pneumatiques comprenant une composition de caoutchouc renforcées par une charge inorganique renforçante et contenant un agent de couplage de l'élastomère avec cette charge.

En particulier, les manufacturiers de pneumatiques souhaitent améliorer les propriétés de la bande de roulement des pneumatiques. De manière connue, la bande de roulement doit obéir à un grand nombre d'exigences techniques, souvent antinomiques, parmi lesquelles une résistance élevée à l'usure, une faible résistance au roulement, etc. En particulier, elle doit offrir un bon comportement routier au pneumatique.

Pour améliorer le comportement routier, on le sait, une rigidité supérieure du somment du pneumatique, en particulier de la bande de roulement, est souhaitable. L'augmentation de la rigidité peut être obtenue par exemple en augmentant le taux de charge renforçante ou en incorporant certaines résines renforçantes dans les compositions constituées de cette bande de roulement (voir par exemple WO02/10269). US2017/073508A1 décrit des compositions pour pneumatiques comprenant un silane substitué permettant d'augmenter la rigidité.

Toutefois, de manière connue, une telle augmentation de la rigidité du somment du pneumatique, notamment de la bande de roulement, peut pénaliser les propriétés de rupture (notamment d'allongement à la rupture) et donc l'endurance du pneumatique.

Le but de la présente invention est de fournir un pneumatique comprenant au moins une composition de caoutchouc renforcée par une charge inorganique présentant une bonne endurance sans que soit pénalisé sa rigidité. Plus particulièrement, le but de la présente invention est de fournir un pneumatique comprenant au moins une composition de caoutchouc renforcée par une charge inorganique présentant un allongement à la rupture élevé sans que soit pénalisée sa rigidité aux moyennes déformations (c'est-à-dire entre de 50% et 100% de déformation).

Ce but est atteint en ce que la Demanderesse a découvert que le compromis entre une bonne rigidité (notamment aux moyennes déformations) et une bonne endurance (en particulier un allongement à la rupture élevé) pouvait être obtenu en utilisant un polysulfure porteur de groupes associatifs azotés à titre d'agent de coupage de l'élastomère avec la charge dans une composition de caoutchouc renforcée par une charge inorganique renforçante et comprenant un élastomère non isoprénique à titre d'élastomère majoritaire.

### 1 RÉSUMÉ DE L'INVENTION

L'invention concerne un pneumatique comportant au moins une composition de caoutchouc à base d'au moins un élastomère diénique non isoprénique à titre d'élastomère majoritaire, une charge inorganique à titre de charge renforçante, un système de réticulation et au moins un polysulfure de formule générale (I) à titre d'agent de couplage de l'élastomère avec la charge inorganique renforçante 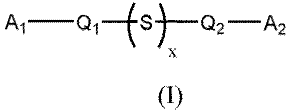 dans laquelle :
- A₁ et A₂ représentent chacun un groupe associatif comprenant au moins un atome d'azote répondant à la formule (VII) représentée ci-dessous dans laquelle le symbole * représente le rattachement direct des groupes A₁ et A₂ aux groupes Q₁ et Q₂ respectivement;
- Q₁ et Q₂, identiques ou différents, représentent chacun un groupe de liaison divalent,
- x est un nombre supérieur ou égal à 2.

Les groupes A₁ et A₂ sont identiques et répondent à la formule (VII) 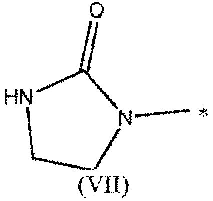 dans laquelle le symbole * représente le rattachement direct des groupes A₁ et A₂ aux groupes Q₁ et Q₂ respectivement.

Selon un mode de réalisation préféré, les groupes Q₁ et Q₂, identiques ou différents, représentent chacun un radical hydrocarboné divalent en C₁-C₂₄ linéaire ou ramifié, substitué ou non, et éventuellement interrompu par un ou plusieurs atomes d'azote ou d'oxygène, de préférence représentent un radical hydrocarboné divalent en C₁-C₁₃, linéaire ou ramifié, substitué ou non, et éventuellement interrompu par un ou plusieurs atomes d'azote ou d'oxygène.

Selon un mode de réalisation préféré, x est un nombre compris dans un domaine allant de 2 à 8, de préférence allant de 2 à 6, plus préférentiellement encore allant de 2 à 4.

Selon un mode de réalisation préféré, l'agent de couplage de l'élastomère avec la charge inorganique renforçante est un mélange de polysulfures de formule générale (I) avec A₁, A₂, x, Q₁ et Q₂ tels que définis ci-dessus.

Selon un mode de réalisation préféré, le mélange de polysulfures de formule générale (I) comprend au moins 20% molaire de polysulfures de formule générale (I) avec x ≥ 4, de préférence comprend au moins 20% molaire de polysulfures de formule générale (I) avec x compris dans un domaine allant de 4 à 8, plus préférentiellement de 4 à 6.

Selon un mode de réalisation préféré, le polysulfure de formule générale (I) répond à la formule (VIII) ou à la formule (IX) 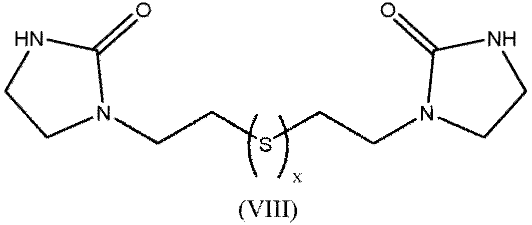 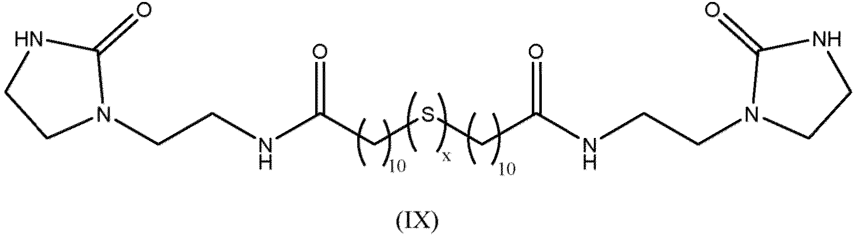 dans lesquelles x est un nombre compris dans un domaine allant de 2 à 8, de préférence allant de 2 à 6, plus préférentiellement encore allant de 2 à 4, encore plus préférentiellement x=4.

Selon un mode de réalisation préféré, l'agent de couplage de l'élastomère avec la charge inorganique renforçante est un mélange de polysulfures de formule (VIII) avec x tel que défini ci-dessus.

Selon un mode de réalisation préféré, le mélange de polysulfures de formule générale (VIII) comprend au moins 20% molaire de polysulfures de formule générale (VIII) avec x ≥ 4, de préférence comprend au moins 20% molaire de polysulfures de formule générale (VIII) avec x compris dans un domaine allant de 4 à 8, plus préférentiellement de 4 à 6.

Selon un mode de réalisation préféré, l'élastomère diénique non isoprénique est choisi dans le groupe constitué par les polybutadiènes, les copolymères de butadiène, et leurs mélanges.

Selon un mode de réalisation préféré, l'élastomère diénique non isoprénique est choisi dans le groupe constitué par les polybutadiènes, les copolymères de butadiène et de styrène et leurs mélanges.

Selon un mode de réalisation préféré, l'élastomère diénique non isoprénique est un élastomère statistique.

Selon un mode de réalisation préféré, le taux de charge inorganique renforçante dans la composition de caoutchouc est compris dans un domaine allant de 10 à 200 pce, de préférence de 30 à 150 pce.

Selon un mode de réalisation préféré, la charge inorganique renforçante comprend de la silice.

Selon un mode de réalisation préféré, la silice présente une surface spécifique BET supérieure ou égale à 30 m²/g.

Selon un mode de réalisation préféré, le taux d'agent de couplage dans la composition de caoutchouc est compris dans un domaine allant de 1 à 20 pce.

Selon un mode de réalisation préféré, la composition de caoutchouc comprend en outre du noir de carbone.

Selon un mode de réalisation préféré, le taux de noir de carbone dans la composition de caoutchouc est compris dans un domaine allant de 2 à 20 pce.

Selon un mode de réalisation préféré, la composition de caoutchouc comprend en outre au moins un agent plastifiant choisi parmi les huiles d'extension, les résines plastifiantes et leurs mélanges.

La présente invention permet de surmonter les inconvénients de l'état de la technique. Elle fournit plus particulièrement des pneumatiques comportant au moins une composition de caoutchouc à base d'au moins un élastomère diénique non isoprénique à titre d'élastomère majoritaire, une charge inorganique à titre de charge renforçante, un système de réticulation et au moins un polysulfure de formule générale (I) à titre d'agent de couplage de l'élastomère avec la charge inorganique renforçante présentant un allongement à la rupture élevé tout en présentant une rigidité aux moyennes déformations élevés. Avantageusement, les nouveaux polysulfures de formule générale (I) sont obtenus en peu d'étapes par rapport à la synthèse du TESPT, avec de bons rendements, à partir de matières premières peu onéreuses et facilement disponibles. En plus, de l'amélioration des propriétés précitées, l'utilisation de ces polysulfures de formule générale (I) dans les compositions de caoutchouc comprenant une charge inorganique renforçante telle que la silice, et un élastomère diénique non isoprénique à titre d'élastomère majoritaire, permettent avantageusement de réduire les coûts de production de ces pneumatiques.

### 2 - MÉTHODE DE MESURE UTILISÉES.

### Essais de traction

Ces essais permettent de déterminer les contraintes d'élasticité et les propriétés à la rupture. Sauf indication différente, ils sont effectués conformément à la norme ASTM D412-98 de 1998 (éprouvette C). On utilise les éprouvettes ASTM C d'épaisseur 2,5 mm. Les courbes force déplacement sont faites en première élongation (i.e. sans cycles d'accommodation), à une vitesse de 500 mm/min, à une température de 23°C ± 2°C et dans les conditions normales d'hygrométrie (50 ± 5% d'humidité relative) selon la norme ASTM D1349 de 1999. On mesure le module sécant à 50% d'allongement, noté MSV50% et exprimé en MPa. Le module sécant vrai (MSV) est le rapport entre la contrainte d'extension rapportée à la section réelle de l'éprouvette.

Les résultats sont indiqués en base 100 ; la valeur arbitraire 100 étant attribuée à la composition de caoutchouc témoin pour calculer et comparer le MSV50% des différentes compositions de caoutchouc à tester. La valeur en base 100 du MSV50% pour la composition de caoutchouc à tester est calculée selon l'opération suivante: (valeur mesurée du MSV50% de la composition de caoutchouc à tester / valeur mesurée du MSV50% de la composition de caoutchouc témoin) × 100. De cette façon, un résultat supérieur à 100 indique une amélioration du MSV50%, qui correspond à une amélioration de la propriété rigidité aux moyennes déformations.

On mesure également l'allongement à la rupture exprimé en % à une vitesse de 500 mm/min, à une température de 23°C ± 2°C et dans les conditions normales d'hygrométrie (50 ± 5% d'humidité relative) selon la norme ASTM D1349 de 1999.

Les résultats sont indiqués en base 100 ; la valeur arbitraire 100 étant attribuée à la composition de caoutchouc témoin pour calculer et comparer ensuite l'allongement à la rupture des différentes compositions de caoutchouc à tester. La valeur en base 100 de l'allongement à la rupture pour la composition de caoutchouc à tester est calculée selon l'opération suivante: (valeur mesurée de l'allongement à la rupture de la composition de caoutchouc à tester / valeur mesurée de l'allongement à la rupture de la composition de caoutchouc témoin) × 100. De cette façon, un résultat supérieur à 100 indique une amélioration de la propriété allongement à la rupture.

### Température de transition vitreuse Tg

La température de transition vitreuse Tg est mesurée de manière connue par DSC (Differential Scanning Calorimetry), selon la norme ASTM D3418 de 1999.

### Microstructure des polymères

La spectroscopie proche infrarouge (NIR) est utilisée pour déterminer quantitativement le taux massique de styrène dans l'élastomère ainsi que sa microstructure (répartition relative des unités butadiène 1,2-vinyl, 1,4-trans et 1,4-cis). Le principe de la méthode repose sur la loi de Beer-Lambert généralisée à un système multi-composants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### 3 - DESCRIPTION DÉTAILLÉE DE L'INVENTION

L'invention ainsi que ses avantages seront aisément compris à la lumière de la description et des exemples de réalisation.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend « pce » (usuellement « phr » en anglais) la partie en poids d'un constituant pour cent parties en poids du ou des élastomères, c'est-à-dire du poids total du ou des élastomères.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. À titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Dans le cadre de l'invention, les produits contenant du carbone mentionnés dans la description peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Les pneumatiques selon l'invention comportent au moins une composition de caoutchouc à base d'au moins un élastomère diénique non isoprénique à titre d'élastomère majoritaire, une charge inorganique à titre de charge renforçante, un système de réticulation et au moins un polysulfure de formule générale (I) telle que définie dans la revendication 1 à titre d'agent de couplage de l'élastomère avec la charge inorganique renforçante.

### Élastomère diénique non isoprénique

Les compositions de caoutchouc utilisables dans les pneumatiques conformes à l'invention comprennent au moins un élastomère diénique non isoprénique à titre d'élastomère majoritaire.

Par « élastomère (ou indistinctement « caoutchouc » ; les deux termes étant considérés comme synonymes) diénique », qu'il soit naturel ou synthétique, doit être compris de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés dans deux catégories : ceux dit « essentiellement insaturés » et ceux dits « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15% (% en moles)). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50% (% en mole).

Ces définitions étant données, on entend plus particulièrement par élastomère diénique susceptible d'être utilisé:
(a) tout homopolymère d'un monomère diène conjugué, notamment tout homopolymère obtenu par polymérisation d'un monomère diène conjugué ayant de 4 à 12 atomes de carbone;
(b) tout copolymère obtenu par copolymérisation d'un ou plusieurs monomères diènes conjugués entre eux ou avec un ou plusieurs monomères vinylaromatiques ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Par « élastomère diénique non isoprénique », doit être compris au sens de la présente demande un élastomère diénique issu au moins en partie (i.e. un homopolymère ou un copolymère) de monomères diénique autres que le monomère isoprène.

Plus particulièrement, l'élastomère diénique non isoprénique utilisable dans les compositions de caoutchouc des pneumatiques de l'invention peut être :
(a) tout homopolymère d'un monomère diène conjugué autre que l'isoprène, notamment tout homopolymère obtenu par polymérisation d'un monomère diène conjugué ayant de 4 à 12 atomes de carbone autre que l'isoprène;
(b) tout copolymère obtenu par copolymérisation de deux ou de plusieurs monomères diènes conjugués entre eux, ces monomères ayant une structure différente de l'isoprène ;
(c) tout copolymère obtenu par copolymérisation d'un monomère ou de plusieurs monomères diènes conjugués ayant une structure différente de l'isoprène avec un ou plusieurs monomères vinylaromatiques ayant de 8 à 20 atomes de carbone;
(d) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

À titre de monomères diènes conjugués autre que l'isoprène conviennent notamment le butadiène-1,3, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, le méta-, le para-méthylstyrène, le mélange commercial « vinyle-toluène », le para-tertiobutylstyrène, les méthoxystyrènes, les chlorostyrènes, le vinylmésitylène, le divinylbenzène et le vinylnaphtalène.

Les copolymères mentionnés ci-dessus peuvent contenir entre 99% et 20% en poids d'unités diéniques conjugués autre que l'unité isoprénique et entre 1% et 80% en poids d'unités vinylaromatiques.

Les élastomères diéniques non isoprénique peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques non isoprénique peuvent être par exemple à blocs, statistiques, séquencés, microséquencés. Ils peuvent être préparés en dispersion ou en solution selon des techniques bien connues de l'homme du métier. Ils peuvent être couplés et/ou étoilés ou encore fonctionnalisés avec un agent de couplage et/ou d'étoilage ou de fonctionnalisation.

. Pour un couplage à une charge inorganique renforçante telle qu'une silice, on peut citer par exemple des groupes fonctionnels silanol ou polysiloxane ayant une extrémité silanol (tels que décrits par exemple dans FR2740778 ou US6013718, et WO2008/141702), des groupes alkoxysilane (tels que décrits par exemple dans FR2765882 ou US 5977238), des groupes carboxyliques (tels que décrits par exemple dans WO01/92402 ou US6815473, WO2004/096865 ou US2006/0089445) ou encore des groupes polyéthers (tels que décrits par exemple dans EP1127909 ou US6503973, WO2009/000750 et WO2009/000752). On peut aussi citer comme élastomères fonctionnels ceux préparés par l'utilisation d'un amorceur fonctionnel, notamment ceux portant une fonction amine ou étain (voir par exemple WO2010/072761).

Selon un mode de réalisation avantageux, l'élastomère diénique non isoprénique peut être un élastomère à blocs ; autrement dit il peut appartenir à la famille des élastomères diéniques thermoplastiques (« TPE »). En particulier, on préfère utiliser dans ce mode de réalisation avantageux des élastomères diéniques thermoplastiques styréniques non isopréniques. De structure intermédiaire entre les polymères thermoplastiques et les élastomères, les élastomères diéniques thermoplastiques styréniques non isopréniques sont constitués de séquences rigides polystyrène reliées par des séquences souples élastomère diénique non isoprénique, par exemple polybutadiène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités butadiène pour un copolymère blocs styrène/ butadiène/ styrène).

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert*-butylstyrène), les chlorostyrènes (par exemple monochlorostyrène, dichlorostyrène), les bromostyrènes.

La masse moléculaire moyenne en nombre (notée Mn) de l'élastomère diénique thermoplastique styrénique non isoprénique est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante. Ainsi, on a constaté qu'une valeur comprise dans un domaine de 50 000 à 300 000 g/mol était particulièrement bien adaptée, notamment à une utilisation dans une composition d'un pneumatique.

La masse moléculaire moyenne en nombre (Mn) de l'élastomère diénique thermoplastique styrénique non isoprénique est déterminée de manière connue, par chromatographie d'exclusion stérique (SEC). L'échantillon est préalablement solubilisé dans du tétrahydrofurane à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère diénique thermoplastique styrénique non isoprénique est de préférence inférieur à 3 ; plus préférentiellement Ip est inférieur à 2.

Préférentiellement, le taux pondéral de styrène, dans l'élastomère diénique thermoplastique styrénique non isoprénique, est compris entre 5% et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10% et 40%, en particulier entre 15 et 35%.

Les blocs élastomères de l'élastomère diénique thermoplastique styrénique non isoprénique pour les besoins de l'invention, peuvent être tous les élastomères diéniques non isopréniques connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère de cet élastomère est supérieure à -100°C.

Le bloc élastomère de l'élastomère diénique thermoplastique styrénique non isoprénique est de préférence composé majoritairement d'une partie élastomère diénique non isoprénique. Par majoritairement, on entend un taux pondéral en monomère diénique non isoprénique le plus élevé par rapport au poids total du bloc élastomère, et de préférence un taux pondéral de plus de 50%, plus préférentiellement de plus de 75% et encore plus préférentiellement de plus de 85%.

Préférentiellement, des diènes conjugués en C₄ - C₁₄ peuvent être polymérisés ou copolymérisés pour constituer un bloc élastomère diénique. De préférence, ces diènes conjugués sont choisis parmi le butadiène, le pipérylène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est le butadiène.

Selon une variante, les monomères polymérisés pour former la partie élastomère de l'élastomère diénique thermoplastique styrénique non isoprénique peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

À titre d'illustration, cet autre monomère susceptible de copolymériser avec le monomère premier peut être choisi parmi les monomères éthyléniques tels que définis précédemment (par exemple l'éthylène), les monomères diènes autre que l'isoprène, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle.

L'élastomère diénique thermoplastique styrénique non isoprénique peut être choisi notamment dans le groupe constitué par les copolymères blocs styrène/ butadiène (SB), les copolymères blocs styrène/ butadiène/ styrène (SBS), les copolymères blocs styrène/ butadiène/ butylène (SBB), les copolymères blocs styrène/ butadiène/ butylène/ styrène (SBBS), et les mélanges de ces copolymères blocs.

Selon un autre mode de réalisation avantageux, l'élastomère diénique non isoprénique est un polymère, notamment statistique, choisi parmi les polybutadiènes (BR), les copolymères de butadiène et les mélanges de ces élastomères. Comme polybutadiènes, conviennent en particulier ceux ayant une teneur (en % molaire) en unités comprise dans un domaine allant de 4 à 80% ou ceux ayant une teneur (% molaire) en unités cis-1,4 supérieure à 80%. Bien entendu, l'homme du métier comprend que les copolymères de butadiène peuvent être n'importe quel type de copolymère de butadiène à l'exception des copolymères résultant de la polymérisation d'unités butadiéniques avec des unités isopréniques.

Plus préférentiellement encore, l'élastomère diénique non isoprénique est choisi parmi les polybutadiènes, les copolymères de butadiène et de styrène et les mélanges de ces élastomères.

Plus préférentiellement encore, l'élastomère diénique non isoprénique est un copolymère de butadiène et de styrène ou un mélange de copolymères de butadiène et de styrène.

Le copolymère de butadiène et de styrène est préférentiellement un copolymère de butadiène-styrène (SBR). Il peut s'agir par exemple d'un SBR préparé en émulsion (« ESBR ») ou d'un SBR préparé en solution (« SBR »). Les teneurs en liaisons vinyliques (-1,2), trans-1,4 et cis-1,4 de la partie butadiénique du SBR peuvent être variables. Par exemple, la teneur en vinyle peut être comprise dans un domaine allant de 15% à 80% (% molaire) par rapport au l'ensemble des unités de la partie butadiénique, la teneur en liaisons trans-1,4 peut être comprise dans un domaine allant de 15% à 80% (% molaire) par rapport au l'ensemble des unités de la partie butadiénique.

Selon une variante de l'invention, le copolymère de butadiène-styrène (SBR) peut être fonctionnalisé.

Plus préférentiellement encore, le copolymère, de butadiène-styrène (SBR) est fonctionnalisé par un groupe fonctionnel silanol ou polysiloxane ayant une extrémité silanol, ou bien peut être époxydé.

L'élastomère diénique non isoprénique est l'élastomère majoritaire dans les compositions de caoutchouc utilisables dans les pneumatiques selon l'invention, c'est-à-dire que la fraction massique de l'élastomère diénique non isoprénique dans ces compositions est supérieure à 50%, de préférence supérieure ou égale à 60% par rapport à la masse totale des élastomères présents dans ces compositions de caoutchouc. Préférentiellement, le taux de l'élastomère diénique non isoprénique est supérieur à 50 pce, plus préférentiellement encore supérieur ou égal à 60 pce dans les compositions de caoutchouc utilisables dans les pneumatiques de l'invention.

Selon un mode de réalisation avantageux, l'élastomère diénique non isoprénique est le seul élastomère diénique des compositions de caoutchouc utilisables dans les pneumatiques selon l'invention. En d'autres termes, le taux de l'élastomère diénique non isoprénique dans les compositions de caoutchouc utilisables dans les pneumatiques selon l'invention est de 100 pce.

Selon un autre mode réalisation avantageux, l'élastomère diénique non isoprénique est utilisé en coupage (en mélange) avec au moins un autre élastomère diénique, notamment différent de l'élastomère diénique non isoprénique.

Préférentiellement, cet autre élastomère diénique (ou élastomère diénique additionnel) peut être choisi parmi les homopolymères ou les copolymères d'isoprène.

Préférentiellement, l'élastomère diénique additionnel est choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (IIR), les copolymères d'isoprène-styrène (SIR), les copolymères d'isoprène-butadiène (BIR) ou les copolymères d'isoprène-butadiène-styrène (SBIR).

Plus préférentiellement encore, l'élastomère diénique additionnel est choisi parmi le caoutchouc naturel et un polyisoprène cis-1,4 de synthèse. Par exemple, le polyisoprène de synthèse, peut être un polysioprène ayant un taux (% molaire) de liaisons cis-1,4 supérieur à 90%, plus préférentiellement encore supérieur à 95%.

Lorsqu'un élastomère diénique additionnel est présent dans les compositions de caoutchouc utilisables dans les pneumatiques de l'invention, son taux est inférieur à 50 pce, de préférence inférieur ou égal à 40 pce.

Les élastomères diéniques non isopréniques de la composition peuvent être utilisés en association avec tout type d'élastomère synthétique autre que diénique, voire avec des polymères autres que des élastomères, par exemple des polymères thermoplastiques.

### Charge renforçante

Les compositions de caoutchouc utilisables dans les pneumatiques de l'invention comprennent au moins une charge inorganique à titre de charge renforçante.

Par « charge inorganique renforçante », doit être entendu ici, de manière connue, toute charge inorganique ou minérale, quelles que soient sa couleur et son origine (naturelle ou de synthèse), encore appelée charge « blanche », charge « claire » ou encore charge « non-noire » (« *non-black* filler ») par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique; une telle charge se caractérise généralement, de manière connue, par la présence de groupes hydroxyle (-OH) à sa surface.

Préférentiellement, la charge inorganique renforçante est une charge du type siliceux ou alumineux, ou un mélange de ces deux types de charges. Préférentiellement, la charge inorganique renforçante comprend de la silice. Plus préférentiellement encore, la charge inorganique renforçante consiste en de la silice.

La silice (SiO₂) utilisée peut être toute silice renforçante connue de l'homme du métier, notamment toute silice (notamment précipitée ou pyrogénée) présentant une surface spécifique BET supérieure ou égale à 30 m²/g, préférentiellement supérieure ou égale à 60 m²/g. Préférentiellement, la silice (SiO₂) utilisée peut être toute silice renforçante connue de l'homme du métier, notamment toute silice (notamment précipitée ou pyrogénée) présentant une surface spécifique BET inférieure à 450 m²/g, de préférence comprise dans un domaine allant de 30 à 400 m²/g.

Plus préférentiellement encore, la silice peut être toute silice notamment précipitée ou pyrogénée présentant une surface spécifique BET ainsi qu'une surface spécifique CTAB toutes deux inférieures à 450 m²/g, de préférence comprises dans un domaine allant de 30 à 400 m²/g. Les silices précipitées hautement dispersibles (dites « HDS » pour « highly dispersible » ou « highly dispersible silica ») sont préférées, en particulier pour la fabrication de pneumatiques présentant une faible résistance au roulement ; comme exemples de telles silices, on peut citer les silices « Ultrasil 7000 » de la société Evonik, les silices « Zeosil 1165 MP, 1135 MP, 1115 MP et Zeosil premium 200 MP » de la société Solvay, la silice « Hi-Sil EZ150G » de la société PPG, les silices « Zeopol 8715, 8745 ou 8755 » de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

A titre d'autres exemples de charge inorganique susceptible d'être utilisée dans les compositions de caoutchouc utilisables dans les pneumatiques de l'invention peuvent être encore cités des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Comme exemples de telles charges organiques, on peut citer les charges organiques de polyvinylaromatique fonctionnalisé telles que décrites dans les demandes WO2006/069792-A1 et WO2006/069793-A1.

L'homme du métier saura adapter le taux de charge inorganique renforçante selon la nature de la charge inorganique utilisée et selon le type de pneumatique concerné, par exemple pour moto, pour véhicule de tourisme ou encore pour véhicule utilitaire tel que camionnette ou poids lourd. De préférence, le taux de charge inorganique renforçante (préférentiellement le taux de silice) dans la composition de caoutchouc utilisable dans les pneumatiques de l'invention est compris dans un domaine allant de 10 à 200 pce, plus préférentiellement de 30 à 150 pce, et plus préférentiellement encore de 60 à 140 pce, l'optimum étant de manière connue différent selon les applications particulières visées.

Selon un mode de réalisation préférée, les compositions de caoutchouc utilisables dans les pneumatiques de l'invention peuvent comprendre en outre du noir de carbone.

Comme noirs de carbone conviennent tous les noirs de carbone, notamment les noirs conventionnellement utilisés dans les pneumatiques (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

La quantité de noir de carbone présente dans les compositions de caoutchouc utilisables pour les pneumatiques de l'invention peut varier dans de larges limites, elle est, de préférence inférieure, à celle de la charge inorganique renforçante. Avantageusement, on utilise du noir de carbone en très faible proportion, avec un taux compris dans un domaine allant de 2 à 20 pce et de préférence à un taux inférieur à 10 pce dans les compositions de caoutchouc utilisables pour les pneumatiques de l'invention. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Bien entendu, les compositions de caoutchouc utilisables dans les pneumatiques de l'invention peuvent être totalement dépourvues de noir de carbone.

### Agent de couplage de l'élastomère et de la charge inorganique renforçante

### Polysulfure de formule générale (I)

Le polysulfure utilisé dans les compositions de caoutchouc utilisables dans les pneumatiques de l'invention répond donc à la formule générale (I) précitée 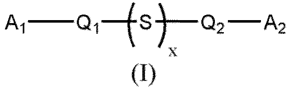 dans laquelle S est un atome de soufre, x est un nombre entier ou décimal supérieur ou égal à 2, A₁ et A₂ représentent chacun un groupe associatif comprenant au moins un atome d'azote répondant à la formule (VII) définie ci-dessus, et Q₁ et Q₂, identiques ou différents, représentent chacun un groupe de liaison divalent. Le polysulfure de formule générale (I), grâce à sa double fonctionnalité est utilisé comme agent de couplage de l'élastomère avec la charge inorganique renforçante dans les compositions de caoutchouc utilisables dans les pneumatiques de l'invention. Il permet notamment d'améliorer le compromis de propriétés rigidité aux moyennes déformations / allongement à la rupture par rapport aux pneumatiques comportant une composition de caoutchouc comprenant usuellement du TEPST comme agent de couplage de l'élastomère avec la charge inorganique renforçante.

Par « groupes associatifs », on entend des groupes susceptibles de s'associer notamment les uns aux autres par des liaisons hydrogène, ioniques et/ou hydrophobes. Il s'agit, selon un mode préféré de l'invention, de groupes susceptibles de s'associer par des liaisons hydrogène.

Lorsque les groupes associatifs sont susceptibles de s'associer par des liaisons hydrogène, chaque groupe associatif comporte de préférence au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Les groupes associatifs selon l'invention sont également susceptibles de s'associer par des liaisons hydrogène, ioniques et/ou hydrophobes à des fonctions présentes sur des charges, notamment sur les charges renforçantes et en particulier sur les charges renforçantes inorganiques, telles que la silice.

Les groupes A₁ et A₂ sont identiques et répondent à la formule (VII) 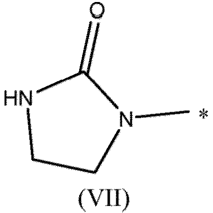 dans laquelle le symbole * représente le rattachement direct des groupes A₁ et A₂ aux groupes Q₁ et Q₂ respectivement.

Les groupes de liaison Q₁ et Q₂ peuvent être tout radical divalent. Ils sont de préférence choisis de sorte à ne pas, ou peu, interférer avec les groupes associatifs A₁ et A₂.

Lesdits groupes Q₁ et Q₂ sont alors considérés comme des groupements inertes vis-à-vis des groupes associatifs A₁ et A₂. Par « groupement inerte vis-à-vis des groupes associatifs A₁ et A₂ », on entend un groupement qui ne comprend pas de fonctions associatives telles que définies selon l'invention.

Les groupes Q₁ et Q₂ sont de préférence indépendamment l'un de l'autre, un radical hydrocarboné divalent, linéaire, ramifié ou cyclique. Ils peuvent indépendamment contenir un ou plusieurs radicaux aromatiques, et/ou un ou plusieurs hétéroatomes tels que l'atome d'azote, l'atome de soufre, l'atome d'oxygène. Ce radical hydrocarboné divalent peut éventuellement être substitué, les substituants étant de préférence inertes vis-à-vis des groupes associatifs A₁ et A₂.

Selon un mode de réalisation préféré, les groupes Q₁ et Q₂, identiques ou différents, représentent chacun un radical hydrocarboné divalent en C₁-C₂₄ linéaire ou ramifié, substitué ou non, et éventuellement interrompu par un ou plusieurs atomes d'azote ou d'oxygène. Plus préférentiellement, Q₁ et Q₂, identiques ou différents, représentent chacun un radical hydrocarboné divalent en C₁-C₁₃ linéaire ou ramifié, substitué ou non, et éventuellement interrompu par un ou plusieurs atomes d'azote ou d'oxygène. Encore plus préférentiellement, Q₁ et Q₂, identiques ou différents, représentent chacun un alcanediyle linéaire en C₁-C₆.

Les groupes Q₁ et Q₂ peuvent être différents ou identiques, mais de préférence Q₁ et Q₂ sont identiques.

Dans la formule générale (I) ci-dessus, le symbole x désigne un nombre, notamment un nombre entier ou un nombre décimal. x est un nombre supérieur à 2, plus préférentiellement un nombre compris dans un domaine allant de 2 à 8, de préférence dans un domaine allant de 2 à 6, plus préférentiellement encore dans un domaine allant de 2 à 4.

Selon des modes de réalisation particuliers, x est un nombre allant de 2 à 5, ou x est un nombre allant de 2 à 4, ou x est un nombre allant de 3 à 8, ou x est un nombre allant de 3 à 5, ou x est un nombre égal à 2 ou 3, ou x est un nombre égal à 3 ou 4.

Selon d'autres modes de réalisation particuliers, x vaut 2, ou 3, ou 4, ou 5 ou 6.

Préférentiellement, l'agent de couplage de l'élastomère avec la charge inorganique renforçante est un polysulfure de formule générale (I) précitée dans laquelle A₁ et A₂ sont identiques et représentent chacun un groupe associatif de formule (VII), Q₁ et Q₂ sont identiques et représentent chacun un alcanediyle linéaire en C₁-C₁₃, de préférence en C₁-C₆, et x est un nombre supérieur à 2, plus préférentiellement un nombre compris dans un domaine allant de 2 à 8, de préférence dans un domaine allant de 2 à 6, plus préférentiellement encore dans un domaine allant de 2 à 4.

Plus préférentiellement encore, l'agent de couplage de l'élastomère avec la charge inorganique renforçante utilisé dans les compositions de caoutchouc pour les pneumatiques de l'invention est un polysulfure choisi parmi les polysulfures de formule (VIII) ou (IX) suivantes : 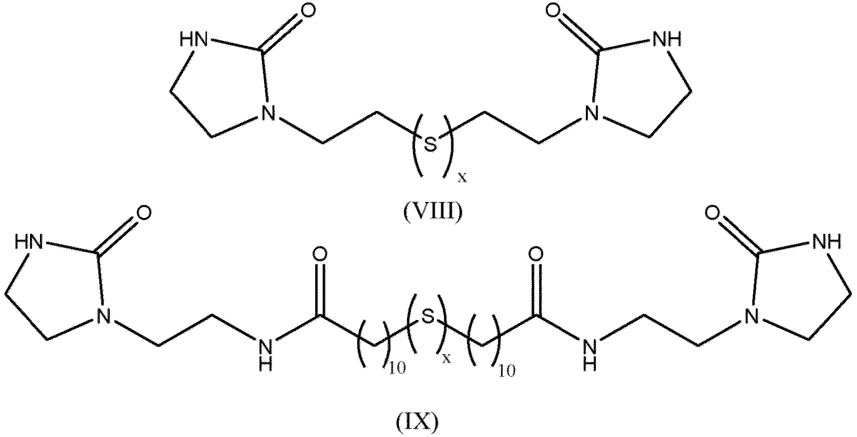 dans lesquelles x est un nombre supérieur ou égal à 2, de préférence compris dans un domaine allant de 2 à 8, de préférence allant de 2 à 6, plus préférentiellement encore allant de 2 à 4, encore plus préférentiellement x = 4.

Plus préférentiellement encore, l'agent de couplage polysulfure utilisé dans les compositions de caoutchouc utilisable dans les pneumatiques de l'invention est un polysulfure de formule (X) ou (XI) suivantes :

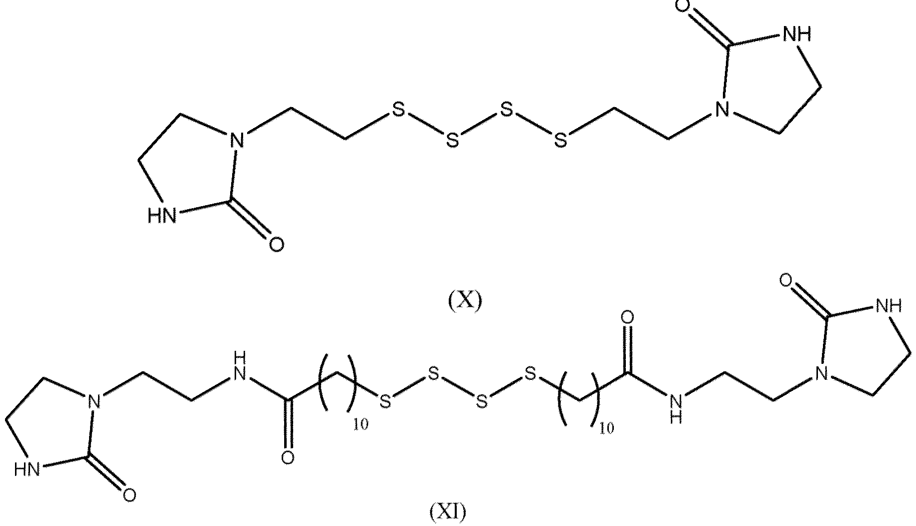

Les polysulfures de formule générale (I) synthétisés peuvent être des mélanges de polysulfures (par exemple de x = 2 à x = 8) avec par conséquence une valeur moyenne pour x qui peut éventuellement être différente d'une valeur entière. La valeur moyenne pour x est préférentiellement comprise dans un domaine allant de 2 à 6, de préférence de 3 à 5, plus préférentiellement encore allant de 3,5 à 4,5.

La nature chimique des polysulfures de formule (I) peut être déterminée par toute technique bien connue de l'homme du métier, notamment par RMN ¹H. Dans le cas d'un mélange, il peut être nécessaire, dans certains cas de séparer les différentes espèces du mélange par toute technique bien connue de l'homme du métier avant de procéder à une analyse RMN ¹H.

De manière avantageuse, l'agent de couplage de l'élastomère avec la charge inorganique renforçante est un mélange de polysulfures de formule générale (I), ledit mélange comprenant au moins 20% molaire de polysulfure de formule générale (I) avec x≥4 (de préférence avec x compris dans un domaine allant de 4 à 8, plus préférentiellement de 4 à 6).

Plus préférentiellement encore, les polysulfures de formule générale (VIII) synthétisés peuvent être des mélanges de polysulfures (par exemple de x = 2 à x = 8) avec par conséquence une valeur moyenne pour x qui peut éventuellement être différente d'une valeur entière. La valeur moyenne pour x est préférentiellement comprise dans un domaine allant de 2 à 6, de préférence de 3 à 5, plus préférentiellement encore allant de 3,5 à 4,5.

De manière avantageuse, l'agent de couplage de l'élastomère avec la charge inorganique renforçante est un mélange de polysulfures de formule générale (VIII), ledit mélange comprenant au moins 20% molaire de polysulfure de formule générale (VIII) avec x≥4 (de préférence avec x compris dans un domaine allant de 4 à 8, plus préférentiellement de 4 à 6).

L'homme du métier sait adapter la quantité d'agent de couplage, c'est-à-dire le taux du polysulfure de formule générale (I) ou du mélange de polysulfures de formule générale (I) (de préférence le taux du polysulfure de formule (VIII) ou du mélange de polysulfures de formule (VIII)) en fonction du taux de charge inorganique renforçante des compositions de caoutchouc utilisables dans les pneumatiques selon l'invention. Les polysulfures de formule générale (I) ou le mélange de polysulfures de formule générale (I) (de préférence ceux de formule (VIII)) se sont révélés suffisamment efficaces à eux seuls pour le couplage d'un élastomère et d'une charge inorganique renforçante, telle que la silice et peuvent être utilisés à un taux préférentiel supérieur à 1 pce (partie en poids pour cent parties d'élastomères). Avantageusement, le taux de polysulfure(s) de formule générale (I) (de préférence de formule (VIII)) dans les compositions de caoutchouc utilisables pour les pneumatiques de l'invention est compris dans un domaine allant de 1 à 20 pce, de préférence allant de 1 à 10 pce.

Les polysulfures de formule générale (I) (de préférence les polysulfures de formule (VIII)) peuvent avantageusement constituer le seul agent de couplage de l'élastomère avec la charge inorganique renforçante présent dans les compositions de caoutchouc utilisables dans les compositions de l'invention. Toutefois selon un mode de réalisation particulier, les compositions de caoutchouc utilisables dans les pneumatiques selon l'invention peuvent comprendre un agent de couplage additionnel différent du polysulfure de formule générale (I), notamment du polysulfure de formule (VIII) ou du mélange de polysulfures de formule générale (I), notamment du mélange de polysulfures de formule (VIII).

Cet agent de couplage additionnel peut être choisi dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que le « NXT-Silane » commercialisé par la société Momentive.

Dans ce mode de réalisation particulier, la fraction pondérale de l'agent de couplage additionnel est minoritaire. Elle est, de préférence, inférieure à 50% en poids par rapport au poids total des agents de couplage (poids total des agents de couplage = poids du ou des polysulfures de formule générale (I), notamment de formule (VIII), + poids de l'agent de couplage additionnel).

Lorsque les compositions de caoutchouc utilisables dans les pneumatiques de l'invention comprennent un agent de couplage additionnel, le taux total d'agents de couplage dans les compositions de caoutchouc est compris dans un domaine allant de 1 à 20 pce, de préférence de 1 à 10 pce.

### Procédés de préparation des polysulfures de formule générale (I)

Les polysulfures de formule générale (I) peuvent être préparés selon un procédé comprenant de manière générale une étape de réaction d'un composé soufré avec un composé de formule (XII)

A₁ - Q₁ - Z (XII)

et un composé de formule (XIII)

A₂ - Q₂ - Z (XIII),

dans lesquelles
- A₁, A₂, Q₁ et Q₂ ont les significations définies ci-dessus, et
- Z représente un atome Cl ou un groupe SH.

Le composé de formule (XII) et le composé de formule (XIII) peuvent être différents ou identiques ; de préférence ils sont identiques. Dans ce cas, le procédé prévoit la réaction d'une certaine quantité de composé soufré avec une certaine quantité du composé unique de formule (XII).

Le composé soufré peut être tout composé soufré connu de l'homme du métier susceptible de réagir avec les composés de formule (XII) et les composés de formule (XIII). Par exemple, le composé soufré peut être choisi parmi le soufre, le tétrasulfure de sodium et le monochlorure de soufre.

Selon un mode de réalisation particulier, les polysulfures de formule générale (I), en particulier ceux avec x= 4, sont préparés par un procédé comprenant une étape de réaction du tétrasulfure de sodium avec un composé de formule A₁ - Q₁ - Cl et un composé de formule A₂ - Q₂ - Cl, dans lesquelles A₁, A₂, Q₁ et Q₂ ont les significations définies ci-dessus.

A₁ et A₂ sont un groupement de formule (VII), dans laquelle le symbole * représente le rattachement direct des groupes A₁ et A₂ aux groupes Q₁ et Q₂ respectivement.

De préférence Q₁ et Q₂ sont indépendamment un radical hydrocarboné divalent linéaire ou ramifié en C₁-C₁₃, plus préférentiellement un radical hydrocarboné divalent linéaire en C₁-C₆, de préférence un radical hydrocarboné divalent linéaire en C₂.

Le composé de formule A₁ - Q₁ - Cl et le composé de formule A₂ - Q₂- Cl peuvent être différents ou identiques. De préférence, ils sont identiques. Dans ce cas, le procédé prévoit la réaction d'une certaine quantité de tétrasulfure de sodium avec une certaine quantité du composé unique de formule A₁ - Q₁ - Cl.

Le tétrasulfure de sodium peut être préparé par exemple en faisant réagir du soufre avec du sulfure de sodium anhydride ; celui-ci peut être préparé en faisant réagir de l'éthylate de sodium avec du sulfure d'hydrogène. Le tétrasulfure de sodium est préparé de préférence *in situ* par ajout de soufre dans une solution éthanolique de sulfure de sodium. La substitution nucléophile finale est réalisée de préférence dans le solvant utilisé pour la préparation du tétrasulfure de sodium, c'est-à-dire l'éthanol. La température de cette étape peut être comprise entre la température ambiante (23°C) et la température de reflux du solvant. De préférence, cette étape est réalisée à température de reflux du solvant. Le sel formé peut être éliminé par filtration et le produit final peut être isolé par évaporation du solvant.

Ce procédé peut notamment être appliqué à la préparation du polysulfure de formule (X), selon le schéma synthétique suivant :

Na + EtOH → NaOEt + 1/2 H₂

2 NaOEt + H₂S → Na₂S + EtOH

Na₂S + 3S → Na₂S₄

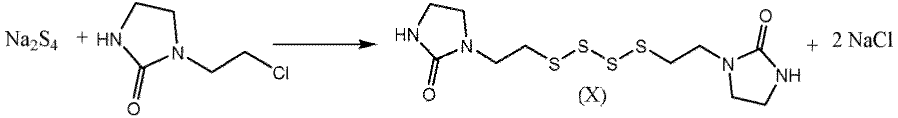

Selon un autre mode de réalisation particulier, les polysulfures de formule générale (I), notamment ceux avec x= 4, sont préparés par un procédé comprenant une étape de réaction du monochlorure de soufre S₂Cl₂ avec un composé de formule A₁ - Q₁ - SH et un composé de formule A₂ - Q₂ - SH, dans lesquelles A₁, A₂, Q₁ et Q₂ ont les significations définies ci-dessus.

De préférence Q₁ et Q₂ sont indépendamment un radical hydrocarboné divalent linéaire ou ramifié en C₁-C₁₃, plus préférentiellement un radical hydrocarboné divalent linéaire en C₁-C₆, de préférence un radical hydrocarboné divalent linéaire en C₂.

De préférence, encore les groupes Q₁ et Q₂ sont identiques.

De préférence le composé de formule A₁ - Q₁ - SH est obtenu par la réaction d'un composé de formule A₁ - Q₁ - Cl avec l'hydrogénosulfure de sodium NaSH. Il peut également être obtenu par une réaction d'estérification ou d'amidification à partir de composés de type A₁-OH ou A₁-NH₂ avec un composé de type HOOC-Q₁-SH.

De préférence le composé de formule A₂ - Q₂ - SH est obtenu par la réaction d'un composé de formule A₂ - Q₂ - Cl avec l'hydrogénosulfure de sodium NaSH. Il peut également être obtenu par une réaction d'estérification ou d'amidification à partir de composés de type A₂-OH ou A₂-NH₂ avec un composé de type HOOC-Q₂-SH.

Le composé de formule A₁ - Q₁ - SH et le composé de formule A₂ - Q₂ - SH peuvent être différents ou identiques, de préférence le composé de formule A₁ - Q₁ - SH et le composé de formule A₂ - Q₂ - SH sont identiques. Dans ce cas, le procédé prévoit la réaction d'une certaine quantité de monochlorure de soufre avec une certaine quantité du composé unique de formule A₁ - Q₁ - SH.

Ce procédé peut être conduit en milieu solvant, de préférence le tétrahydrofurane, à une température comprise entre -10°C et 30°C, de préférence à 0°C environ.

Le polysulfure de formule (X) peut ainsi être préparé à partir d'un mercaptan de l'imidazolidinone et de monochlorure de soufre selon le schéma synthétique suivant :

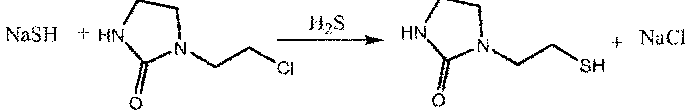

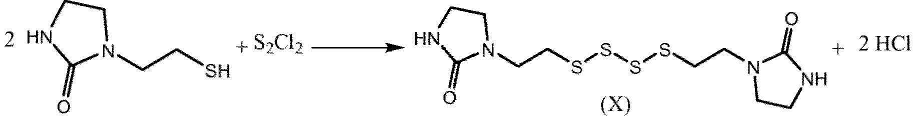

Selon un autre mode de réalisation particulier, les polysulfures de formule générale (I) avec x allant de 2 à 8, de préférence de 2 à 6, et plus particulièrement de 2 à 4, sont préparés par un procédé comprenant une étape de réaction du soufre avec un composé de formule A₁ - Q₁ - SH et un composé de formule A₂ - Q₂ - SH, dans lesquelles A₁, A₂, Q₁ et Q₂ ont les significations définies ci-dessus.

A₁ et A₂ sont un groupement de formule (VII) dans laquelle le symbole * représente le rattachement direct des groupes A₁ et A₂ aux groupes Q₁ et Q₂.

De préférence, les groupes Q₁ et Q₂ sont indépendamment un radical hydrocarboné divalent linéaire ou ramifié en C₁-C₁₃, plus préférentiellement un radical hydrocarboné divalent linéaire en C₁-C₆, de préférence un radical hydrocarboné divalent linéaire en C₂. De préférence les groupes Q₁ et Q₂ sont identiques.

De préférence le composé de formule A₁ - Q₁ - SH est obtenu par la réaction d'un composé de formule A₁ - Q₁ - Cl avec l'hydrogénosulfure de sodium NaSH. Il peut également être obtenu par une réaction d'estérification ou d'amidification à partir de composés de type A₁-OH ou A₁-NH₂ avec un composé de type HOOC-Q₁-SH.

De préférence le composé de formule A₂ - Q₂ - SH est obtenu par la réaction d'un composé de formule A₂ - Q₂ - Cl avec l'hydrogénosulfure de sodium NaSH. Il peut également être obtenu par une réaction d'estérification ou d'amidification à partir de composés de type A₂-OH ou A₂-NH₂ avec un composé de type HOOC-Q₂-SH.

Le composé de formule A₁ - Q₁ - SH et le composé de formule A₂ - Q₂- SH peuvent être différents ou identiques, de préférence ils sont identiques.

Dans ce cas, le procédé prévoit la réaction d'une certaine quantité de soufre avec une certaine quantité du composé unique de formule A₁ - Q₁ - SH.

De préférence, la réaction est catalytique. L'étape de réaction peut être réalisée en présence d'un catalyseur, qui peut notamment être constitué d'une combinaison d'un mercaptan avec un oxyde d'alcène, de préférence l'oxyde d'éthylène, et d'une base alcaline, de préférence la soude.

Un solvant de réaction peut être utilisé notamment si le point de fusion du polysulfure de formule générale (I) est supérieur à 100°C.

La mise en œuvre d'un tel procédé selon ce mode de réalisation permet généralement l'obtention d'un mélange de polysulfures de formule générale (I) dont la valeur moyenne pour x est comprise dans un domaine allant de 2 à 6, de préférence de 3 à 5, plus préférentiellement encore allant de 3,5 à 4,5.

En particulier, le polysulfure de formule (VIII) avec x allant de 2 à 8, de préférence de 2 à 6, plus particulièrement de 2 à 5, et principalement de 2 à 4, peut être préparé à partir d'un mercaptan de l'imidazolidinone et de soufre selon le schéma synthétique suivant :

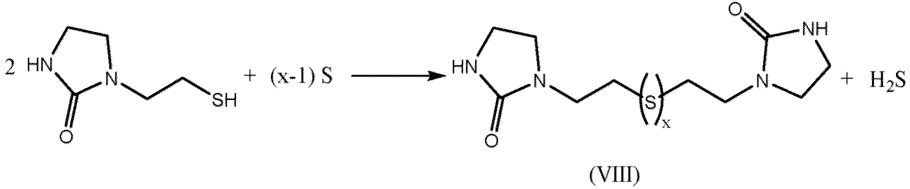

Plus préférentiellement encore ce procédé permet généralement l'obtention d'un mélange de polysulfures de formule (VIII) dont la valeur moyenne pour x est comprise dans un domaine allant de 2 à 6, de préférence de 3 à 5, plus préférentiellement encore allant de 3,5 à 4,5.

Selon un autre mode de réalisation de l'invention avantageux, les mélanges de polysulfures de formule générale (I) ayant une valeur moyenne pour x comprise dans un domaine allant de 2 à 6, de préférence de 3 à 5, plus préférentiellement encore allant de 3,5 à 4,5, peuvent être préparés par un procédé comprenant une étape de réaction d'un polysulfure de sodium Na₂Sₓ de rang moyen x avec un composé de formule A₁ - Q₁ - Cl et un composé de formule A₂ - Q₂ - Cl, dans lesquelles A₁, A₂, Q₁ et Q₂ ont les significations définies ci-dessus.

Le composé de formule A₁ - Q₁ - Cl et le composé de formule A₂ - Q₂ - Cl peuvent être différents ou identiques. De préférence ils sont identiques. Dans ce cas, le procédé prévoit la réaction d'une certaine quantité de polysulfure de sodium avec une certaine quantité du composé unique de formule A₁ - Q₁ - Cl.

Le polysulfure de sodium de rang moyen x peut être préparé par réaction dans un solvant entre du sulfure de sodium et du soufre en adaptant leurs proportions molaires respectives selon l'équation suivante :

Na₂S + (x-1) S → Na₂Sₓ

La réaction de préparation du polysulfure de sodium Na₂Sₓ de rang moyen x et sa réaction avec un composé de formule A₁ - Q₁ - Cl et un composé de formule A₂ - Q₂ - Cl sont de préférence conduites dans un ou des solvants. Un large choix de solvants est possible parmi les solvants connus par l'homme de l'art pour favoriser les substitutions nucléophiles. Par exemple on peut utiliser les solvants suivants, seuls ou en mélange : un alcool tel que le méthanol, l'éthanol, le 1-propanol, le 2-propanol, le butanol, un aromatique tels que le toluène, le xylène, un éther tel que l'isopropyl éther, le méthyl t-butyl éther, le dioxane et le tétrahydrofurane.

La réaction du polysulfure de sodium avec un composé de formule A₁ - Q₁ - Cl et un composé de formule A₂ - Q₂ - Cl peut être réalisée en additionnant les composés de formules A₁ - Q₁ - Cl et A₂ - Q₂ - Cl sur une solution de polysulfure de sodium ou bien en additionnant une solution de polysulfure de sodium sur une solution des composés de formules A₁ - Q₁ - Cl et A₂ - Q₂ - Cl. Alternativement la solution de polysulfure de sodium et la solution des composés de formules A₁ - Q₁ - Cl et A₂ - Q₂ - Cl peuvent être additionnées simultanément dans un réacteur semi continu ou continu. La température de l'étape de réaction peut être comprise entre la température ambiante, par exemple 20°C, et 150°C et de préférence entre la température ambiante, par exemple 20°C, et 100°C. De préférence, cette étape est réalisée à la température de reflux du solvant à pression atmosphérique.

Le ratio molaire entre le polysulfure de sodium Na₂Sₓ de rang moyen x et les composés de formules A₁ - Q₁ - Cl et A₂ - Q₂ - Cl vaut de 0,95 à 1,5, de préférence de 1 à 1,2 et plus préférentiellement de 1 à 1,1.

Selon un mode de réalisation particulier, les réactions sont faites dans un environnement anhydre, avec du polysulfure de sodium anhydre et des solvants anhydres.

Le sel formé au cours de la réaction (NaCl) peut être éliminé par filtration et le produit final peut être isolé par évaporation du solvant. Selon un mode de réalisation particulier, une étape de lavage à l'eau peut être mise en œuvre pour éliminer les résidus inorganiques du produit.

La mise en œuvre d'un tel procédé selon ce mode de réalisation permet généralement l'obtention d'un mélange de polysulfures de formule générale (I) dont la valeur moyenne pour x est comprise dans un domaine allant de 2 à 6, de préférence de 3 à 5, plus préférentiellement encore allant de 3,5 à 4,5.

Plus préférentiellement encore ce mode de réalisation permet généralement l'obtention d'un mélange de polysulfures de formule (VIII) dont la valeur moyenne pour x est comprise dans un domaine allant de 2 à 6, de préférence de 3 à 5, plus préférentiellement encore allant de 3,5 à 4,5.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris sans un domaine allant de 0,5 à 12 pce, en particulier de 1 à 10 pce. L'accélérateur primaire de vulcanisation est utilisé à un taux préférentiel compris de 0,5 à 10 pce, plus préférentiellement compris de 0,5 à 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc.

### Autres additifs de la composition

Les compositions de caoutchouc telle que décrites précédemment permettent à elles seules de répondre au problème technique posé, en particulier elles permettent d'avoir un excellent compromis de propriétés rigidité aux moyennes déformations / allongement à la rupture.

Toutefois, elles peuvent comprendre en outre divers additifs usuels habituellement utilisés dans les compositions d'élastomères destinées à la fabrication de pneumatiques, en particulier de bandes de roulement, comme par exemple des plastifiants, tels que des résines ou des huiles d'extension, que ces dernières soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269

Les compositions de caoutchouc telle que décrites précédemment peuvent comprendre en outre au moins un agent plastifiant choisi parmi les huiles d'extension, les résines plastifiantes ou leur mélanges.

En particulier, les compositions de caoutchouc utilisables pour les pneumatiques de l'invention peuvent comprendre une ou plusieurs résines dites plastifiantes correspondant, par définition ici, à des composés qui sont solides à température ambiante (23°C) (par opposition à un composé plastifiant liquide tel qu'une huile).

Les résines hydrocarbonées sont des polymères bien connus de l'homme du métier, miscibles par nature dans les compositions d'élastomère(s) diénique(s) lorsqu'elles sont qualifiées en outre de « plastifiantes ». Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*")*.* Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

Le point de ramollissement est mesuré selon la norme ISO 4625 (méthode « Ring and Ball »). La température de transition vitreuse Tg est mesurée de manière connue par DSC (*Differential Scanning Calorimetry*), selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Il est connu d'utiliser dans des compositions de caoutchouc pour pneumatiques des résines plastifiantes hydrocarbonées ayant au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol,
- un indice de polymolécularité (Ip) inférieur à 4, préférentiellement inférieur à 3 (rappel : Ip = Mw/Mn avec Mw masse moléculaire moyenne en poids).

Et en particulier, quel que soit le type de résines plastifiantes précités, il est connu de les choisir parmi le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

De préférence, le taux de résines plastifiantes dans les compositions de caoutchouc utilisables dans les pneumatiques conformes à l'invention est compris dans un domaine allant de 10 à 90 pce.

Les compositions de caoutchouc peuvent également contenir des agents de recouvrement de la charge inorganique renforçante, permettant d'améliorer leur faculté de mise en œuvre à l'état cru. Ces agents de recouvrement sont bien connus (voir par exemple les demandes de brevet WO2006/125533-A1, WO2007/017060-A1 et WO2007/003408-A1), on citera par exemple des silanes hydrolysables tels que des hydroxysilanes (voir par exemple WO2009/062733-A2) des alkylalkoxysilanes, , des polyols (par exemple diols ou triols), des polyéthers (par exemple des polyéthylène-glycols), des amines primaires, secondaires ou tertiaires, des polyorgano-siloxanes hydroxylés ou hydrolysables (par exemple des α,ω-dihydroxy-poly-organosilanes (voir par exemple EP0784072-A1)).

Selon un autre mode de réalisation avantageux, les compositions de caoutchouc utilisables pour les pneumatiques de l'invention peuvent comprendre une ou plusieurs huiles d'extension (ou huile plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères, est utilisable. À température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Selon un mode de réalisation particulier de l'invention, le plastifiant liquide est une huile de pétrole, de préférence non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation avantageux, les compositions de caoutchouc utilisables pour les pneumatiques de l'invention peuvent comprendre en outre, une ou plusieurs résines plastifiantes telles que décrites ci-dessus en mélange avec une ou plusieurs huiles d'extension décrites ci-dessus.

### Fabrication des compositions de caoutchouc et du pneumatique

Les compositions de caoutchouc utilisables dans les pneumatiques de l'invention sont fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment l'élastomère diénique non isoprénique à titre d'élastomère majoritaire (et éventuellement les autres élastomères), la charge inorganique à titre de charge renforçante, le polysulfure de formule générale (I) (de préférence le polysulfure de formule (VIII)) et les éventuels autres additifs divers, à l'exception du système de réticulation. L'incorporation de la charge inorganique à l'élastomère peut être réalisée en une ou plusieurs fois en malaxant thermomécaniquement. La phase non-productive est réalisée à haute température, jusqu'à une température maximale comprise entre 110°C et 200°C, de préférence entre 130°C et 185°C, pendant une durée généralement comprise entre 2 et 10 minutes,
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable pour la réalisation des pneumatiques selon l'invention. Le profilé peut par exemple être une bande de roulement.

Le pneumatique selon l'invention est fabriqué par toute technique bien connue de l'homme du métier, par exemple en empilant successivement les différents profilés sur un tambour de confection afin de former une ébauche, puis en conformant l'ébauche afin qu'elle prenne une forme torique et puisse être introduite dans un moule où elle sera cuite (ou réticulée). Cette réticulation peut être conduite de manière connue de l'homme du métier, par exemple à une température comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition de caoutchouc considérée ou encore de la taille du pneumatique.

Le pneumatique selon l'invention est destiné à équiper des tous types de véhicules à moteur, tel que par exemple des véhicules tourisme, des SUV (« Sport Utility Vehicules »), deux roues, des avions, ainsi que des véhicules industriels tels que des camionnettes, des poids-lourds et autres véhicules de transport ou de manutention.

Préférentiellement, la composition de caoutchouc telle que décrite précédemment est celle d'une couche de pneumatique choisie dans le groupe constitué de tout ou partie de la bande de roulement du pneumatique de l'invention.

L'invention concerne les pneumatiques tels que précédemment décrits, tant à l'état cru (c'est à dire avant cuisson) qu'à l'état cuit (c'est à dire après cuisson).

### 4 - EXEMPLES

Les exemples qui suivent illustrent l'invention sans toutefois la limiter.

### 4.1 - Synthèse du produit A :

Le 1-(2-chloroéthyl)-imidazolidin-2-one est préparé selon l'exemple 1b du document WO2012/007684.

Dans un réacteur en verre de 1 litre, muni d'un réfrigérant, et purgé à l'azote, on introduit 25,7 g de sulfure de sodium anhydre (0,33 mol), 471 g de toluène et 189 g d'éthanol anhydre. Sous agitation à température ambiante, on ajoute 31,7 g de soufre

(0,99 mol) puis on porte à reflux à pression atmosphérique pendant 2 heures. On additionne alors un mélange de 91,2 g de 1-(2-chloroéthyl)-imidazolidin-2-one (0,61 mol) dans 188 g d'éthanol anhydre et on laisse à reflux pendant 4 heures.

Le mélange réactionnel est refroidi à température ambiante, puis filtré. Le précipité est lavé avec 20 g d'éthanol. Les filtrats sont rassemblés et évaporés sous vide. Le produit brut est repris dans le dichlorométhane et lavé avec 50 g d'eau. Après décantation, la phase organique est évaporée sous vide. On récupère un produit solide. L'analyse RMN, réalisée sur un spectromètre Bruker AVIII HD 500 équipé d'une sonde BBI 5 mm, indique que ce produit solide contient 98 % molaire de polysulfures de formule (VIII) avec x compris dans un domaine allant de 2 à 8 (dont 51% molaire de composés de formule (VIII) avec x≥ 4), 1% molaire de 1-(2-chloroéthyl)-imidazolidin-2-one et 1% molaire de solvants résiduels.

### 4.2 - Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique non isoprénique (ou le mélange d'élastomères diéniques, le cas échéant), la charge inorganique renforçante, l'agent de couplage, puis les divers autres ingrédients à l'exception du système de vulcanisation. On conduit alors un travail thermomécanique (phase non-productive) en une ou deux étapes (durée totale du malaxage égale à environ 7 min), jusqu'à atteindre une température maximale de « tombée » d'environ 165°C. On récupère le mélange ainsi obtenu, on le refroidit puis on ajoute soufre et accélérateur sulfénamide sur un mélangeur externe (homo-finisseur) à 30°C, en mélangeant le tout (phase productive) pendant 8 à 10 minutes.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques.

### 4.3 - Essai 1

Le but de cet exemple est de démontrer les performances améliorées d'une composition de caoutchouc conforme à l'invention comparée à une composition de caoutchouc conventionnelle.

On prépare ainsi deux compositions de caoutchouc conformément au procédé explicité au paragraphe précédent, à base d'un copolymère SBR non fonctionnalisé, renforcées majoritairement par de la silice. Ces compositions se distinguent l'une de l'autre par la nature de l'agent de coupage utilisé, ces compositions comprenant le même taux molaire d'agents de couplage :
- la composition témoin T1 non conforme à l'invention est une composition conventionnelle qui comprend à titre d'agent de couplage du TESPT,
- la composition C1, conforme à l'invention, se distingue de la composition témoin T1 par la nature de l'agent de couplage qui est le produit A.

On rappelle que le TESPT est le tétrasulfure de bis(3-triéthoxysilylpropyl), de formule commercialisé par exemple par la société Evonik sous la dénomination « Si69 » Le produit commercial est un mélange de polysulfures Sₓ avec une valeur moyenne pour x qui est proche de 4). La formule développée du TESPT est:

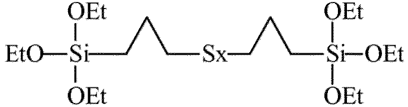

Les tableaux I et II donnent respectivement la formulation de ces deux compositions (taux des différents produits exprimés en pce), et leurs propriétés après cuisson (environ 30 min à 150°C).

**Tableau I**

| **Composition** | **T1** | **C1** |
|---|---|---|
| Élastomère diénique non isoprénique (1) | 100,0 | 100,0 |
| Noir de carbone (2) | 3,0 | 3,0 |
| Charge inorganique renforçante (3) | 71,0 | 71,0 |
| Agent de couplage (4) | 5,7 | (-) |
| Agent de couplage (5) | (-) | 3,7 |
| Plastifiant (6) | 26,0 | 26,0 |
| Antioxydant (7) | 1,5 | 1,5 |
| DPG (8) | 1,3 | 1,3 |
| Oxyde de zinc (9) | 0,9 | 0,9 |
| Acide stéarique (10) | 2,0 | 2,0 |
| Accélérateur (11) | 1,6 | 1,6 |
| Soufre | 1,0 | 1,0 |

| | | |
|---|---|---|
| (1) Copolymère styrène-butadiène non fonctionnalisé (SBR non fonctionnalisé) ayant 26,5% en poids de motif styrène par rapport au poids total du copolymère et 24% molaire de motif 1,2 de butadiène par rapport à la partie butadiénique et ayant une Tg = - 48°C. Ce copolymère a été caractérisé selon les méthodes décrites au paragraphe 2. (2) Noir de carbone N234 commercialisé par la société Cabot Corporation, (3) Silice « Zeosil 1165MP » commercialisée par la société Solvay, (4) TESPT (« Si69 ») commercialisé par la société Evonik, (5) Produit A obtenu selon le protocole décrit au paragraphe 4.1, (6) Plastifiant : huile MES commercialisée par la société ENI sous la référence « Clematis MS » (7) Antioxydant : N-1,3-diméthylbutyl-N-phenyl-para-phénylènediamine commercialisé par Flexys sous la référence « Santoflex 6-PPD » (8) Diphénylguanidine : « vulcacit D » commercilaisée par la société Bayer, (9) Oxyde de zinc de grade industriel commercialisé société Umicore, (10) Stéarine « Pristerene 4931 » commercialisée par la société Uniqema, (11) N-cyclohexyl-2-benzothiazyl-sulfénamide : « Santocure CBS » commercialisée par la société Flexsys, | | |

**Tableau II**

| | **T1** | **C1** |
|---|---|---|
| MSV50% (en base 100) | 100 | 106 |
| Allongement à la rupture (en base 100) | 100 | 146 |

Au vu du tableau II, on constate, de façon surprenante, que la composition C1 conforme à l'invention présente des propriétés d'allongement à la rupture significativement améliorées par rapport à la composition témoin T1 ainsi qu'une amélioration de ses propriétés de rigidité aux moyennes déformations (valeur de MSV50%).

### 4.4 - Essai 2 :

Le but de cet exemple est de démontrer les performances améliorées d'une composition de caoutchouc conforme à l'invention comparée à une composition de caoutchouc conventionnelle.

On prépare ainsi deux compositions de caoutchouc conformément au procédé explicité au paragraphe précédent, à base d'un copolymère SBR fonctionnalisé, renforcées majoritairement par de la silice. Ces compositions se distinguent l'une de l'autre par la nature de leur agent de coupage, ces compositions comprenant le même taux molaire d'agents de couplage :
- la composition témoin T2 non conforme à l'invention. C'est une composition conventionnelle qui comprend à titre d'agent de couplage du TESPT et un copolymère de styrène-butadiène fonctionnalisé.
- la composition C2, conforme à l'invention, se distingue de la composition témoin T1 par la nature de l'agent de couplage qui est le produit A.

Les tableaux III et IV donnent respectivement la formulation des deux compositions (taux des différents produits exprimés en pce), et leurs propriétés après cuisson (environ 30 min à 150°C).

**Tableau III**

| **Composition** | **T2** | **C2** |
|---|---|---|
| Élastomère diénique non isoprénique (12) | 100,0 | 100,0 |
| Noir de carbone (13) | 4,0 | 4,0 |
| Charge inorganique renforçante (14) | 110,0 | 110,0 |
| Agent de couplage de l'élastomère avec la charge inorganique renforçante (15) | 11,0 | (-) |
| Agent de couplage de l'élastomère avec la charge inorganique renforçante (16) | (-) | 7,2 |
| Plastifiants (17) | 72,0 | 72,0 |
| Antioxydant (18) | 1,5 | 1,5 |
| DPG (19) | 2,4 | 2,4 |
| Oxyde de zinc (20) | 0,9 | 0,9 |
| Acide stéarique (21) | 3,0 | 3,0 |
| Accélérateur (22) | 2,3 | 2,3 |
| Soufre | 0,9 | 0,9 |

| | | |
|---|---|---|
| (12) Copolymère styrène-butadiène (SBR) fonctionnalisé avec une fonction silanol bout de chaine et ayant 26,5% en poids de motif styrène par rapport au poids total du copolymère et 24% molaire de motif 1,2 de butadiène par rapport à la partie butadiénique, et ayant une Tg = -48°C. Ce copolymère a été caractérisé selon les méthodes décrites au paragraphe 2. (13) Noir de carbone N234 commercialisé par la société Cabot Corporation, (14) Silice « Zeosil 1165MP » commercialisée par la société Solvay, (15) TESPT (« Si69 ») commercialisé par la société Evonik, (16) Produit A obtenu selon le protocole décrit au paragraphe 4.1, (17) Huile de tournesol oléique commercialisée sous le nom d' « Agripure80 » par la société Cargill, (18) Antioxydant : N-1,3-diméthylbutyl-N-phenyl-para-phénylènediamine commercialisé par Flexys sous la référence « Santoflex 6-PPD » (19) Diphénylguanidine : « vulcacit D » commercilaisée par la société Bayer, (20) Oxyde de zinc de grade industriel commercialisé société Umicore, (21) Stéarine « Pristerene 4931 » commercialisée par la société Uniqema, (22) N-cyclohexyl-2-benzothiazyl-sulfénamide : « Santocure CBS » commercialisée par la société Flexsys, | | |

**Tableau IV**

| | **T2** | **C2** |
|---|---|---|
| MSV50% (en base 100) | 100 | 103 |
| Allongement à la rupture (en base 100) | 100 | 150 |

Au vu du tableau IV, on constate, de façon surprenante, que la composition C2 conforme à l'invention présente des propriétés d'allongement à la rupture significativement améliorées par rapport à la composition témoin T2 ainsi qu'une amélioration de ses propriétés de rigidité aux moyennes déformations (valeur de MSV50%).

En résumé, l'amélioration du compromis de propriétés allongement à la rupture / rigidité aux moyennes déformations est significatif et inattendu au vu des propriétés observées avec une composition de caoutchouc à base d'un élastomère majoritaire diénique non isoprénique comprenant un agent de couplage sulfuré porteur de groupes associatifs azotés, que ledit élastomère soit fonctionnalisé ou non.

## Revendications

1. Pneumatique comportant au moins une composition de caoutchouc à base d'au moins un élastomère diénique non isoprénique à titre d'élastomère majoritaire, une charge inorganique à titre de charge renforçante, un système de réticulation et au moins un polysulfure de formule générale (I) à titre d'agent de couplage de l'élastomère avec la charge inorganique renforçante 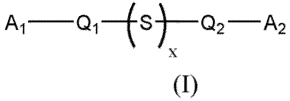 dans laquelle :
- A₁ et A₂ représentent chacun un groupe associatif comprenant au moins un atome d'azote répondant à la formule (VII) 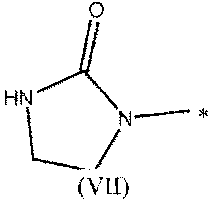 dans laquelle le symbole * représente le rattachement direct des groupes A₁ et A₂ aux groupes Q₁ et Q₂ respectivement ;
- Q₁ et Q₂, identiques ou différents, représentent chacun un groupe de liaison divalent,
- x est un nombre supérieur ou égal à 2.

2. Pneumatique selon la revendication 1, dans lequel les groupes Q₁ et Q₂, identiques ou différents, représentent chacun un radical hydrocarboné divalent en C₁-C₂₄ linéaire ou ramifié, substitué ou non, et éventuellement interrompu par un ou plusieurs atomes d'azote ou d'oxygène, de préférence représentent un radical hydrocarboné divalent en C₁-C₁₃, linéaire ou ramifié, substitué ou non, et éventuellement interrompu par un ou plusieurs atomes d'azote ou d'oxygène.

3. Pneumatique selon l'une quelconque des revendications précédentes, dans lequel x est un nombre compris dans un domaine allant de 2 à 8, de préférence allant de 2 à 6, plus préférentiellement encore allant de 2 à 4.

4. Pneumatique selon l'une quelconque des revendications précédentes, dans lequel l'agent de couplage de l'élastomère avec la charge inorganique renforçante est un mélange de polysulfures de formule générale (I) avec A₁, A₂, x, Q₁ et Q₂ tels que définis dans les revendications 1 à 3.

5. Pneumatique selon la revendication 4, dans lequel le mélange de polysulfures de formule générale (I) comprend au moins 20% molaire de polysulfures de formule générale (I) avec x ≥ 4, de préférence comprend au moins 20% molaire de polysulfures de formule générale (I) avec x compris dans un domaine allant de 4 à 8, plus préférentiellement de 4 à 6.

6. Pneumatique selon l'une quelconque des revendications 1 à 5, dans lequel le polysulfure de formule générale (I) répond à la formule (VIII) ou à la formule (IX) 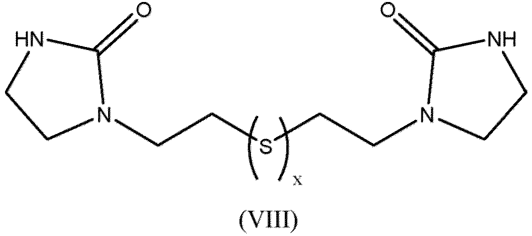 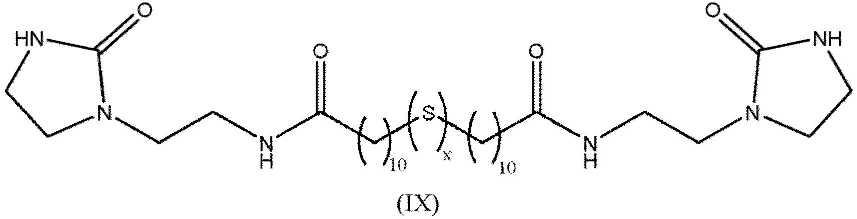 dans lesquelles x est un nombre compris dans un domaine allant de 2 à 8, de préférence allant de 2 à 6, plus préférentiellement encore allant de 2 à 4, encore plus préférentiellement x=4.

7. Pneumatique selon la revendication 6, dans lequel l'agent de couplage de l'élastomère avec la charge inorganique renforçante est un mélange de polysulfures de formule (VIII) avec x tel que défini à la revendication 6.

8. Pneumatique selon la revendication 7, dans lequel le mélange de polysulfures de formule générale (VIII) comprend au moins 20% molaire de polysulfures de formule générale (VIII) avec x ≥ 4, de préférence comprend au moins 20% molaire de polysulfures de formule générale (VIII) avec x compris dans un domaine allant de 4 à 8, plus préférentiellement de 4 à 6.

9. Pneumatique selon l'une quelconque des revendications précédentes, dans lequel l'élastomère diénique non isoprénique est choisi dans le groupe constitué par les polybutadiènes, les copolymères de butadiène, et leurs mélanges.

10. Pneumatique selon la revendication 9, dans lequel l'élastomère diénique non isoprénique est choisi dans le groupe constitué par les polybutadiènes, les copolymères de butadiène et de styrène et leurs mélanges.

11. Pneumatique selon l'une quelconque des revendications précédentes, dans lequel le taux de charge inorganique renforçante dans la composition de caoutchouc est compris dans un domaine allant de 10 à 200 pce, de préférence de 30 à 150 pce.

12. Pneumatique selon l'une quelconque des revendications précédentes, dans laquelle la charge inorganique renforçante comprend de la silice.

13. Pneumatique selon l'une quelconque des revendications précédentes, dans lequel le taux d'agent de couplage dans la composition de caoutchouc est compris dans un domaine allant de 1 à 20 pce.

14. Pneumatique selon l'une quelconque des revendications précédentes, dans lequel la composition de caoutchouc comprend en outre du noir de carbone.

15. Pneumatique selon l'une quelconque des revendications précédentes, dans lequel la composition de caoutchouc comprend en outre au moins un agent plastifiant choisi parmi les huiles d'extension, les résines plastifiantes et leurs mélanges.

## Patentansprüche

1. Reifen, umfassend mindestens eine Kautschukzusammensetzung auf Basis mindestens eines nicht isoprenhaltigen Dien-Elastomers als überwiegendes Elastomer, einen anorganischen Füllstoff als verstärkenden Füllstoff, ein Vernetzungssystem und mindestens ein Polysulfid mit der allgemeinen Formel (I) als Kupplungsmittel zum Kuppeln des Elastomers mit dem verstärkenden anorganischen Füllstoff 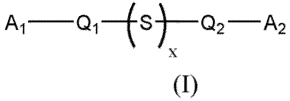 worin:
- A₁ und A₂ jeweils für eine assoziative Gruppe, die mindestens ein Stickstoffatom aufweist, stehen, die der Formel (VII) entspricht 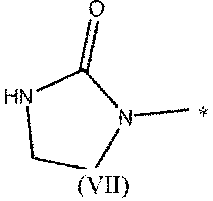 in der das Symbol * für die direkte Anbindung der Gruppen A₁ und A₂ an die Gruppen Q₁ beziehungsweise Q₂ steht;
- Q₁ und Q₂, gleich oder verschieden, jeweils für eine zweiwertige Bindungsgruppe stehen;
- x eine Zahl größer als oder gleich 2 ist.

2. Reifen nach Anspruch 1, wobei die Gruppen Q₁ und Q₂, gleich oder verschieden, jeweils für einen geradkettigen oder verzweigten, substituierten oder nicht substituierten und gegebenenfalls durch ein oder mehrere Stickstoff- oder Sauerstoffatome unterbrochenen zweiwertigen C₁-C₂₄-Kohlenwasserstoffrest stehen, bevorzugt für einen geradkettigen oder verzweigten, substituierten oder nicht substituierten und gegebenenfalls durch ein oder mehrere Stickstoff- oder Sauerstoffatome unterbrochenen zweiwertigen C₁-C₁₃-Kohlenwasserstoffrest stehen.

3. Reifen nach einem der vorhergehenden Ansprüche, wobei x eine Zahl in einem Bereich von 2 bis 8, bevorzugt von 2 bis 6, noch stärker bevorzugt von 2 bis 4 ist.

4. Reifen nach einem der vorhergehenden Ansprüche, wobei das Kupplungsmittel zum Kuppeln des Elastomers mit dem verstärkenden anorganischen Füllstoff eine Mischung aus Polysulfiden mit der allgemeinen Formel (I) mit A₁, A₂, x, Q₁ und Q₂ wie in den Ansprüchen 1 bis 3 definiert ist.

5. Reifen nach Anspruch 4, wobei die Mischung aus Polysulfiden mit der allgemeinen Formel (I) mindestens 20 Mol-% Polysulfide mit der allgemeinen Formel (I) mit x ≥ 4 aufweist, bevorzugt mindestens 20 Mol-% Polysulfide mit der allgemeinen Formel (I) mit x in einem Bereich von 4 bis 8, stärker bevorzugt von 4 bis 6 aufweist.

6. Reifen nach einem der Ansprüche 1 bis 5, wobei das Polysulfid mit der allgemeinen Formel (I) der Formel (VIII) oder der Formel (IX) entspricht 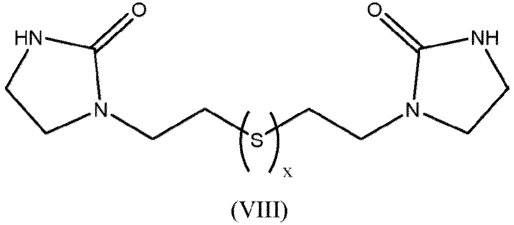 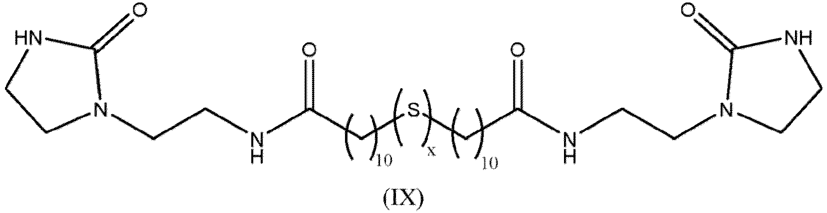 in denen x eine Zahl in einem Bereich von 2 bis 8, bevorzugt von 2 bis 6, noch stärker bevorzugt von 2 bis 4 ist, noch stärker bevorzugt x=4 ist.

7. Reifen nach Anspruch 6, wobei das Kupplungsmittel zum Kuppeln des Elastomers mit dem verstärkenden anorganischen Füllstoff eine Mischung aus Polysulfiden mit der Formel (VIII) mit x wie in Anspruch 6 definiert ist.

8. Reifen nach Anspruch 7, wobei die Mischung aus Polysulfiden mit der allgemeinen Formel (VIII) mindestens 20 Mol-% Polysulfide mit der allgemeinen Formel (VIII) mit x ≥ 4 aufweist, bevorzugt mindestens 20 Mol-% Polysulfide mit der allgemeinen Formel (VIII) mit x in einem Bereich von 4 bis 8, stärker bevorzugt von 4 bis 6 aufweist.

9. Reifen nach einem der vorhergehenden Ansprüche, wobei das nicht isoprenhaltige Dien-Elastomer aus der Gruppe gewählt ist, die aus den Polybutadienen, den Butadien-Copolymeren und ihren Mischungen besteht.

10. Reifen nach Anspruch 9, wobei das nicht isoprenhaltige Dien-Elastomer aus der Gruppe gewählt ist, die aus den Polybutadienen, den Butadien-Styrol-Copolymeren und ihren Mischungen besteht.

11. Reifen nach einem der vorhergehenden Ansprüche, wobei der Gehalt an verstärkendem anorganischem Füllstoff in der Kautschukzusammensetzung in einem Bereich von 10 bis 200 phr, bevorzugt von 30 bis 150 phr, liegt.

12. Reifen nach einem der vorhergehenden Ansprüche, wobei der verstärkende anorganische Füllstoff Siliciumdioxid aufweist.

13. Reifen nach einem der vorhergehenden Ansprüche, wobei der Gehalt an Kopplungsmittel in der Kautschukzusammensetzung in einem Bereich von 1 bis 20 phr liegt.

14. Reifen nach einem der vorhergehenden Ansprüche, wobei die Kautschukzusammensetzung ferner Ruß aufweist.

15. Reifen nach einem der vorhergehenden Ansprüche, wobei die Kautschukzusammensetzung ferner mindestens einen Weichmacher aufweist, der unter den Streckölen, den Weichmacherharzen und ihren Mischungen gewählt ist.

## Claims

1. Tire comprising at least one rubber composition based on at least a non-isoprene diene elastomer as predominent elastomer, an inorganic filler as reinforcing filler, a crosslinking system and at least one polysulphide of general formula (I) as coupling agent of the elastomer to the reinforcing inorganic filler 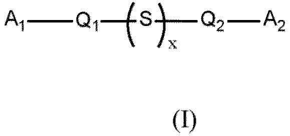 in which :
- A₁ and A₂, each represent an associative group comprising at least one nitrogen atom, corresponding to the formula (VII) 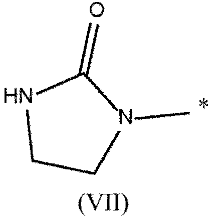 in which the symbol * represents the direct bonding of the A₁ and A₂ groups to the Q₁ and Q₂ groups respectively,
- Q₁ and Q₂, identical or different, each represent a divalent bonding group,
- x is a number greater than or equal to 2.

2. Tire according to claim 1, wherein the groups Q₁ and Q₂, identical or different, each represent a linear or branched divalent hydrocarbon radical in C₁-C₂₄, substituted or not, and optionally interrupted by one or more nitrogen or oxygen atoms, preferably represent a divalent hydrocarbon radical in C₁-C₁₃, linear or branched, substituted or not, and optionally interrupted by one or more nitrogen or oxygen atoms.

3. Tire according to any one of the preceding claims, wherein x is a number within a range extending from 2 to 8, preferably from 2 to 6, more preferably from 2 to 4.

4. Tire according to any one of the preceding claims, wherein the coupling agent of the elastomer to the reinforcing inorganic filler is a mixture of polysulfides of general formula (I) with A₁, A₂, x, Q₁ and Q₂ as defined in claims 1 to 3.

5. Tire according to claim 4, wherein the mixture of polysulfides of general formula (I) comprises at least 20 mole% of polysulfides of general formula (I) with x ≥ 4, preferably comprises at least 20 mole% of polysulfides of general formula (I) with x included in a range from 4 to 8, more preferably from 4 to 6.

6. Tire according to any one of claims 1 to 5, wherein the polysulphide of general formula (I) corresponds to formula (VIII) or to formula (IX) 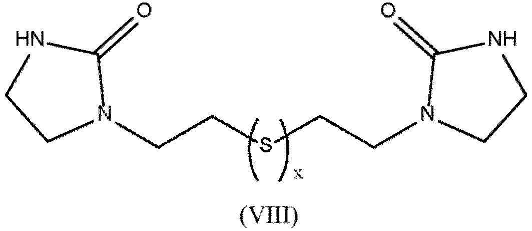 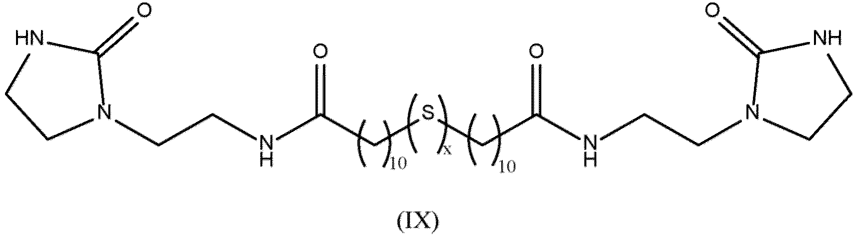 in which x is a number within a range extending from 2 to 8, preferably from 2 to 6, even more preferably from 2 to 4, even more preferably x=4.

7. Tire according to claim 6, wherein the coupling agent of the elastomer to the reinforcing inorganic filler is a mixture of polysulphides of formula (VIII) with x as defined in claim 6.

8. Tire according to claim 7, wherein the mixture of polysulfides of general formula (VIII) comprises at least 20 mole% of polysulfides of general formula (VIII) with x ≥ 4, preferably comprises at least 20 mole% of polysulfides of general formula (VIII) with x included in a range from 4 to 8, more preferably from 4 to 6.

9. Tire according to any one of the preceding claims, wherein the non-isoprene diene elastomer is chosen from the group consisting of polybutadienes, butadiene copolymers, and mixtures thereof.

10. Tire according to claim 9, wherein the non-isoprene diene elastomer is chosen from the group consisting of polybutadienes, copolymers of butadiene and styrene and mixtures thereof.

11. Tire according to any one of the preceding claims, wherein the content of the reinforcing inorganic filler in the rubber composition ranges from 10 to 200 phr, preferably from 30 to 150 phr.

12. Tire according to any one of the preceding claims, wherein the reinforcing inorganic filler comprises silica.

13. Tire according to any one of the preceding claims, wherein the content of the coupling agent in the rubber composition ranges from 1 to 20 phr.

14. Tire according to any one of the preceding claims, wherein the rubber composition further comprises carbon black.

15. Tire according to any one of the preceding claims, wherein the rubber composition further comprises at least one plasticizing agent chosen among extension oils, plasticizing resins and mixtures thereof.
